# EUROPÄISCHE PATENTSCHRIFT

(11) **EP 2 641 337 B1**
(45) Veröffentlichungstag und Bekanntmachung des Hinweises auf die Patenterteilung: **30.05.2018**
(21) Anmeldenummer: 11721726.5
(22) Anmeldetag: 14.04.2011
(51) Int. Cl.: H04B 1/74, H04B 3/60, H04L 1/22, H04L 29/06, H04W 12/02

(54) **SYSTEM ZUR FEHLERSICHEREN UND REDUNDANTEN ÜBERTRAGUNG VON KOMPLEXEN DATEN**
SYSTEM FOR FAILSAFE AND REDUNDANT TRANSMISSION OF COMPLEX DATA
SYSTÈME PERMETTANT UNE TRANSMISSION, PROTÉGÉE CONTRE LES ERREURS ET REDONDANTE, DE DONNÉES COMPLEXES

(30) Priorität: 15.11.2010 AT 18772010
(43) Veröffentlichungstag der Anmeldung: 25.09.2013
(73) Patentinhaber: Siemens Aktiengesellschaft, 80333 München (DE)
(72) Erfinder: FUCHS, Claus, 90768 Fürth (DE); FUNKE, Mirko, 04821 Brandis (DE); PFANZ, Christian, 92355 Velburg (DE); PITTERLING, Tim, 93345 Hausen (DE); SCHEIDER, Martin, 90530 Wendelstein (DE); KOFLER, Wolfgang, A-6175 Kematen (AT); WECHNER, Stefan, A-6071 Aldrans (AT)
(74) Vertreter: Maier, Daniel Oliver
(86) Internationale Anmeldenummer: PCT/EP2011/055933
(87) Internationale Veröffentlichungsnummer: WO 2012/065758

(56) Entgegenhaltungen:
- EP-A1- 0 937 370
- EP-A2- 0 104 486
- DE-A1-102007 035 186
- JOHAN AKERBERG ET AL: "Integration of WirelessHART networks in Distributed Control Systems using PROFINET IO", INDUSTRIAL INFORMATICS (INDIN), 2010 8TH IEEE INTERNATIONAL CONFERENCE ON, IEEE, PISCATAWAY, NJ, USA, 13. Juli 2010 (2010-07-13), Seiten 154-159, XP031733461, ISBN: 978-1-4244-7298-7
- ZUO YUN ET AL: "Network Management in WirelessHART Network for Industry Application", WIRELESS COMMUNICATIONS NETWORKING AND MOBILE COMPUTING (WICOM), 2010 6TH INTERNATIONAL CONFERENCE ON, IEEE, PISCATAWAY, NJ, USA, 23. September 2010 (2010-09-23), Seiten 1-4, XP031828463, ISBN: 978-1-4244-3708-5
- KJELLSSON J ET AL: "Integration of a Wireless I/O Interface for PROFIBUS and PROFINET for Factory Automation", IEEE TRANSACTIONS ON INDUSTRIAL ELECTRONICS, IEEE SERVICE CENTER, PISCATAWAY, NJ, USA, Bd. 56, Nr. 10, 1. Oktober 2009 (2009-10-01), Seiten 4279-4287, XP011267860, ISSN: 0278-0046, DOI: DOI:10.1109/TIE.2009.2017098
- FELD J: "PROFINET - scalable factory communication for all applications", FACTORY COMMUNICATION SYSTEMS, 2004. PROCEEDINGS. 2004 IEEE INTERNATIO NAL WORKSHOP ON VIENNA, AUSTRIA SEPT. 22-24, 2004, PISCATAWAY, NJ, USA,IEEE, 22. September 2004 (2004-09-22), Seiten 33-38, XP010756130, DOI: DOI:10.1109/WFCS.2004.1377673 ISBN: 978-0-7803-8734-8
- DE DOMINICIS C M ET AL: "On the improvement of WirelessHART Access Points by means of Software Defined Radio", FACTORY COMMUNICATION SYSTEMS (WFCS), 2010 8TH IEEE INTERNATIONAL WORKSHOP ON, IEEE, PISCATAWAY, NJ, USA, 18. Mai 2010 (2010-05-18), Seiten 71-74, XP031732737, ISBN: 978-1-4244-5460-0

## Beschreibung

### Technisches Gebiet

Die vorliegende Erfindung betrifft allgemein das Gebiet automatischer Sicherheitssteuerungen und Austausch von komplexen Daten, insbesondere Steuerdaten, Audio- und/oder Videodaten. Im Speziellen bezieht sich die vorliegende Erfindung auf ein System zur fehlersicheren und redundanten Übertragung dieser komplexen Daten. Die Daten werden zwischen einer stationären, zentralen Kontrolleinheit und einer Komponente zur Sicherheitssteuerung in einer beweglichen Transporteinheit über ein drahtloses Kommunikationssystem übertragen bzw. ausgetauscht, wobei das Kommunikationssystem mehrere Zugangspunkte umfasst.

### Stand der Technik

In den letzten Jahren ist der Automatisierungsgrad bei technischen Einrichtungen und Geräten wie z.B. Transportsystemen für Güter und/oder Personen, Schienenfahrzeugen, People Movern, fahrerlose Transporteinheiten, Berg- und Seilbahnen, etc. sowie bewegte Systemen im Industrie- und Energietechnikbereich (z.B. Industrieroboter, Rotor und stationäre Teile bei Windkraftanlagen, etc.) stark angestiegen. Viele Abläufe wie z.B. Bewegungsabläufe bei Transportsystemen oder bewegten Systemen im Industrie- und Energietechnikbereich werden heutzutage weitgehend automatisiert gesteuert und von einer Sicherheitsebene bzw. Überwachungsebene aus auf einen ordnungsgemäßen Ablauf kontrolliert.

Steuerfunktionen für Anlagen, welche insbesondere für einen Transport von Gütern (z.B. Gefahrengütern, etc.) und/oder zum Transport von Personen (z.B. People Mover, Bergbahnen, Seilbahnen, etc.) eingesetzt werden, müssen häufig spezielle Sicherheitskriterien wie z.B. getrennte Steuerungen in einer beweglichen Transporteinheit und in einer zentralen Kontrolleinheit aufweisen. Meist ist die auf Sicherheitsebene bzw. Überwachungsebene eingesetzte Kontrolleinheit zentral und stationär ausgeführt. Die Kontrolleinheit kann beispielsweise bei einem Antrieb der technischen Einrichtung oder wie z.B. bei Transportsystemen für Personen und/oder Güter in einer Station untergebracht sein. Zusätzlich weist die bewegliche Einheit wie z.B. eine Transporteinheit für Güter und/oder Personen, etc., welche beispielsweise gesteuert und/oder auf Sicherheit überwacht werden soll, eine Komponente zur Sicherheitssteuerung auf.

Zusätzlich sind - vor allem beim Transport von Personen und/ oder Gefahrengütern - umfangreiche Überwachungsfunktionen wie z.B. zur Sicherung von Ein- und Ausfahren in Stationen, Überwachung einer Bewegungsbahn, etc. vorgesehen. Häufig sind Steuerungs- und Überwachungsfunktionen bei der beweglichen Einheit bzw. Transporteinheit in der Komponente zur Sicherheitssteuerung zusammengefasst. Für die Steuerung und Überwachung der beweglichen Einheit werden dann Daten wie z.B. Steuerdaten, etc. zwischen der zentralen Kontrolleinheit und der Komponente zur Sicherheitssteuerung in der beweglichen Einheit bzw. Transporteinheit ausgetauscht. Für diesen Datenaustausch wird üblicherweise ein Kommunikationssystem eingesetzt.

Üblicherweise sind Kommunikationssysteme in der Nachrichtentechnik Einrichtungen bzw. eine Infrastruktur für die Übermittlung von Informationen bzw. Daten. Das Kommunikationssystem stellt dazu Verbindungen zwischen mehreren Endstellen wie der Komponente zur Sicherheitssteuerung und der zentralen Kontrolleinheit her. Werden für eine Übertragung von Daten als Übertragungsmedium beispielsweise elektrische Leiter eingesetzt, so werden derartige Kommunikationssysteme auch als drahtgebunden bezeichnet. Werden die Daten im freien Raum unter Nutzung eines anderen Übertragungsmediums wie z.B. elektromagnetische Wellen (Funk, Licht, etc.) und/oder Schallwellen übertragen, so wird ein derartiges Kommunikationssystem als drahtlos bezeichnet.

Derzeit erfolgt beispielsweise insbesondere im Bereich der Personentransportsysteme (z.B. bei Schienenfahrzeugen, People Movern, fahrerlosen Transporteinheiten, etc.) die Übertragung der Daten drahtgebunden mittels sogenannter induktiver Einkopplung bzw. mittels eines induktiven Linienleiters. Bei einem induktiven Linienleitersystem werden für die Überwachung der beweglichen Transporteinheit z.B. entlang einer Bewegungsbahn dieser Transporteinheit Sendekabel und Rückleiter entlang geführt. Über den Linienleiter werden dann z.B. mehrmals pro Sekunde Daten wie z.B. Betriebszustände, Temperaturwerte, etc. zwischen der Komponente zur Sicherheitssteuerung und der zentralen Kontrolleinheit übertragen. Auf dem umgekehrten Weg können aber auch Daten (z.B. Standort, Geschwindigkeit, etc.) vom der beweglichen Transporteinheit über den Linienleiter an die zentrale Kontrolleinheit gesendet und dort ausgewertet werden.

Ein induktives System zur Übertragung von Daten mittels Linienleiter-Installation weist allerdings den Nachteil auf, dass nur einfache Steuerdaten und sehr einfache, analoge Sprachsignale übertragen werden können. Für eine Übertragung von komplexen Daten bzw. Datenpaketen, wie z.B. komplexen Steuerdaten, Audiodaten, Videodaten, Internet-Protokoll-Datenpaketen, etc. sind derartige Kommunikationssysteme nicht geeignet. Zusätzlich ist eine Installation eines Linienleitersystems aufwendig und kostenintensiv, da im Verlauf der Bewegungsbahn der beweglichen Einheit für die Datenübertragung zumindest zwei Kabel verlegt werden müssen - insbesondere in unwegsamen Gelände wie z.B. bei Bergbahnen, etc. oder bei schwer oder kaum zugänglichen Installationsorten (z.B. bei der Überwachung von Gefahrenguttransporten, Seilbahnen, etc., Überwachung von Rotoren in einer Windkraftanlage, etc.) kann dies sehr aufwendig und teuer bzw. teilweise unmöglich sein. Um entsprechende Sicherheitskriterien zu erfüllen, müssen diese Kabel außerdem laufend gewartet und überprüft werden.

Bei Luftseilbahnen werden daher beispielsweise die Daten zur Steuerung induktiv in eines der Seile (z.B. Tragseil, Zugseil) eingekoppelt. Aus der Schrift DE 199 44 919 A1 ist z.B. ein Verfahren zur Kommunikation zwischen einer Kabine und einer Berg- und/oder Talstation einer Luftseilbahn bekannt, bei welchem Kommunikationssignale elektrisch und/oder magnetisch in das Tragseil und/oder Zugseil eingekoppelt werden, wobei bevorzugt eine induktive Kopplung verwendet wird. Dabei wird z.B. eine Stromsignal in das jeweilige Seil eingekoppelt und an einem anderen Ort wieder ausgekoppelt. Zum send- und empfangsseitigen Modulieren des Stromsignals werden Modems eingesetzt. Dieses Verfahren weist allerdings den Nachteil auf, dass die Übertragung der Information nicht redundant erfolgt und damit besonders anfällig für Störungen ist. Außerdem können auf diese Weise Daten wie beispielsweise komplexe Steuerdaten, Audiodaten, Videodaten, etc., die bei Sicherungssteuerung häufig vorausgesetzt werden - nur sehr schwer bzw. gar nicht übertragen werden. Außerdem ist ein derartiges System auch nicht für Anwendungen im Industrie- und/oder Energietechnikbereich geeignet.

Im Industriebereich werden daher z.B. häufig für die Datenkommunikation drahtlose Kommunikationssysteme eingesetzt, über welche auch komplexere Datenstrukturen übertragen werden können bzw. welche auf einfache und kostengünstige Weise in schwierig oder kaum zugänglichen Bereichen installiert und gewartet werden können. Drahtlose Kommunikationssysteme weisen häufig Zugangspunkte auf, über welche Verbindungen zum Kommunikationssystem und/oder zwischen Kommunikationsteilnehmern für z.B. einen Austausch von Daten aufgebaut werden können. Von einem Zugangspunkt wie z.B. zu einem auf Funk basierenden drahtlosen Kommunikationssystem wird eine örtlich begrenzter Zugangsbereich gebildet. Befindet sich ein Kommunikationsteilnehmer wie z.B. eine bewegliche Transporteinheit innerhalb dieses Zugangsbereichs, so kann eine Verbindung zum Kommunikationssystem aufgebaut werden. Für eine Abdeckung größerer Areale werden dann üblicherweise mehrere Zugangspunkte eingesetzt, wodurch auch auf einfache Weise schwer zugängliche Bereich erreicht werden können.

Allerdings kann ein Teilnehmer bei einem drahtlosen Kommunikationssystem zu einem bestimmten Zeitpunkt immer nur mit einem Zugangspunkt für einen Datenaustausch verbunden sein. Bewegt sich nun dieser Teilnehmer - z.B. eine bewegliche Transporteinheit, etc. - durch das vom drahtlosen Kommunikationssystem abgedeckte Areal, so werden üblicherweise Zugangsbereiche verschiedener Zugangspunkten des Kommunikationssystems durchlaufen. D.h. der Teilnehmer muss von einem Zugangspunkt zum nächsten Zugangspunkt wechseln. Ein derartiges Wechseln zwischen Zugangspunkten wird insbesondere in drahtlosen Kommunikationssystemen auf Basis von Funk wie z.B. Wireless LAN (WLAN), etc. als Roamingvorgang oder internes Roaming bezeichnet.

Ein Roamingvorgang - d.h. ein Wechsel von einem Zugangspunkt zum nächsten - wird üblicherweise durch eine schwache bzw. schwächer werdende Signalstärke ausgelöst. Wird von der durch einen Teilnehmer empfangenen Signalstärke eines Zugangspunkts ein bestimmter Schwellwert unterschritten, so wird von diesem Teilnehmer auf jenen anderen Zugangspunkt gewechselt, welcher mit einer besseren Signalstärke empfangen wird. Während dieses Wechsels entsteht eine sogenannte Totzeit, während der der Teilnehmer - meist sehr kurzfristig - mit keinem Zugangspunkt verbunden ist. In dieser Totzeit können daher vom jeweiligen Übertragungsmedium (z.B. Funk, Licht, Schall, etc.) keine Daten übermittelt werden.

Das bedeutet, ein Datenaustausch zwischen einer stationären Kontrolleinheit und einer beweglichen Einheit bzw. Transporteinheit wäre zumindest sehr kurzfristig wegen eines Roamingvorgangs unterbrochen. Daher weist der Einsatz von drahtlosen Kommunikationssystemen insbesondere für den Austausch von sicherheitsrelevanten Daten, bei dem häufig spezielle Sicherheitskriterien zu erfüllen sind, den Nachteil auf, dass die Daten nicht mehr fehlersicher übertragen werden können bzw. die Verfügbarkeit der Datenübertragung diese Sicherheitskriterien nicht erfüllt, da es beispielsweise bei einer zu geringen Signalstärke (z.B. unter 60% im Bereich der Funk basierten Kommunikationssysteme) zu Fehlern bei der Datenübertragung und/oder Wiederholung in der Datenübertragung kommen kann und/oder geforderte Zeitintervalle (z.B. Reaktionszeiten, etc.) überschritten werden.

### Darstellung der Erfindung

Der Erfindung liegt daher die Aufgabe zugrunde, ein System zur fehlersicheren und redundanten Übertragung von komplexen Daten, insbesondere Steuerdaten, Audio- und/oder Videodaten, anzugeben, durch welches auf einfache und kostengünstige Weise komplexe Daten sicher, fehlerfrei und mit hoher Qualität zwischen einer zentraler Kontrolleinheit und einer Komponente zur Sicherheitssteuerung in einer beweglichen Einheit über ein drahtloses Kommunikationssystem übertragen werden.

Die Lösung dieser Aufgabe erfolgt, durch ein System der eingangs angegebenen Art, wobei entlang einer Bewegungsbahn einer beweglichen Transporteinheit Zugangspunkte zu einem drahtlosen Kommunikationssystem vorgesehen sind. Für die Kommunikation mit den Zugangspunkten sind am Fahrzeug zumindest zwei Übertragungsmodule angebracht und die Übertragung der komplexen Daten zwischen der zentralen Kontrolleinheit und den zumindest zwei Übertragungsmodulen wird parallel über zumindest zwei getrennte Übertragungskanäle des drahtlosen Kommunikationssystems durchgeführt. Dabei ist jeweils einer der zumindest zwei getrennten Übertragungskanäle einem der zumindest zwei Übertragungsmodule zugeordnet. Eine Ankopplung der zumindest zwei Übertragungsmodule an die Komponente zur Sicherheitssteuerung der beweglichen Transporteinheit wird über jeweils ein Koppelmodul durchgeführt.

Der Hauptaspekt der Erfindung besteht darin, dass durch einen Einsatz von Koppelmodulen zur Ankopplung der zumindest zwei Übertragungsmodule an die Komponente zur Sicherheitssteuerung der Transporteinheit eine physikalische Trennung zwischen internen Kommunikation bzw. Sicherungssteuerung der beweglichen Einheit bzw. Transporteinheit und der Kommunikation zwischen der Transporteinheit und der zentralen Kontrolleinheit über das drahtlose Kommunikationssystem erzielt wird. Durch eine derartige Trennung der Kommunikation innerhalb der beweglichen Transporteinheit - insbesondere der Sicherheitssteuerung - und der externen Kommunikation mit der zentralen Kontrolleinheit über das drahtlose Kommunikationssystemen wird z.B. bei Funk basierenden Kommunikationssystemen eine sogenannte Schleifenbildung verhindert. Zusätzlich ermöglicht der Einsatz von Koppelmodulen die Anbindung der Komponente zur Sicherheitssteuerung in der beweglichen Transporteinheit an zumindest zwei getrennte Übertragungskanäle. Dadurch wird auf einfache und kostengünstige Weise eine sichere und redundante Datenübertragung zwischen zentraler Kontrolleinheit und Sicherungssteuerung in der Transporteinheit gewährleistet.

Zusätzlich bietet diese Vorgehensweise unterschiedliche Kommunikationssysteme für interne und externe Kommunikation und Datenübertragung zu nutzen. So kann beispielsweise innerhalb der Transporteinheit leitergebundene Datenübertragung z.B. über das sogenanntes Ethernet genutzt werden und für die externe Datenübertragung wird beispielsweise Licht, Laser, Infrarot, Schall, etc. eingesetzt - je nach Einsatzbereich des erfindungsgemäßen Systems.

Durch den Einsatz eines drahtlosen Kommunikationssystems wird auf einfache Weise eine Übertragung von komplexen Daten, insbesondere von komplexen Steuerdaten, Audio- und/oder Videodaten wie z.B. Voice-over-IP-Daten, CCTV-Daten, etc., zwischen zentraler Kontrolleinheit und beweglicher Transporteinheit mit hoher Qualität ermöglicht. Entsprechend der jeweiligen Standards, auf denen das drahtlose Kommunikationssystem basiert (z.B. Wireless LAN, Mobilfunk, Bluetooth, Digital Enhanced Cordless Telecommunications (DECT), Wireless HART (Highway Adressable Remote Transducer), etc.), und entsprechend dem jeweils verwendeten drahtlosen Übertragungsmedium (z.B. Funk, Licht, Laser, Infrarot, Schall, etc.) kann das erfindungsgemäße System auf einfache und kostengünstige Weise an die jeweilige Anwendung - wie z.B. im Bereich des Transports von Gütern und/oder Personen (z.B. People Mover, Berg- und Seilbahnen, fahrerlose Fahrzeugen, Schiffe, etc.), im Bereich von Industrieanwendungen (z.B. bewegliche Roboter, etc.) und/der im Bereich der Energietechnik (z.B. Überwachung eines Rotors in einem Windkraftwerk, etc.) angepasst werden.

Außerdem ist das erfindungsgemäße System durch den Einsatz des drahtlosen Kommunikationssystems und die entsprechenden Koppelmodule beispielweise auch in schwer zugänglichen bzw. kaum zugänglichen Gebieten (z.B. Berghänge, enge verbaute Anlagen, etc.) und/oder Gefahrenzonen (z.B. in Umgebung von gefährlichen/giftigen Stoffen, etc.) einfacher und kostengünstiger einsetzbar als entsprechende andere Sicherheitssteuerungssysteme. Durch den Einsatz von ein oder mehreren Zugangspunkten, über welche ein örtlich begrenztes, drahtloses Kommunikationssystem beispielsweise entlang einer beliebigen Bewegungsbahn (z.B. lineare, rotierende, freie, etc. Bahnkurve) der beweglichen (Transport-)Einheit gebildet wird, ist es nicht mehr notwendig für eine Kommunikation zwischen zentraler Kontrolleinheit und der Transporteinheit z.B. Kabel mitzuführen bzw. Signal in ein Kabel einzukoppeln.

Ein weiterer Vorteil des erfindungsgemäßen Systems besteht darin, dass aufgrund der redundanten Kommunikation bzw. durch den Einsatz von zwei getrennten Übertragungskanälen Einzelfehler (z.B. Unterbrechung, Störung eines Kanals, etc.) sowie durch die Bewegung der beweglichen (Transport-)Einheit bzw. der daran angebrachten Übertragungsmodule ausgelöste Wechsel von einem Zugangspunkt zum nächsten Zugangspunkt - d.h. sogenannte Roamingvorgänge - innerhalb des Kommunikationssystems kaum zeitliche Einflüsse auf die Übertragung der Daten haben. Denn zwischen den zwei getrennten Übertragungskanälen kann stoßfrei (d.h. mit geringer Reaktionszeit) umgeschaltet werden.

Vorteilhafter Weise sind die zumindest zwei Übertragungsmodule mit unterschiedlicher Ausrichtung in einer Übertragungseinheit auf der beweglichen Transporteinheit angebracht. Die Übertragungsmodule dienen dabei jeweils als eine Art Sende- und Empfangseinheit bzw. Antenne. Durch die Anbringung von zumindest zwei Übertragungsmodulen an der Transporteinheit wird die Verfügbarkeit der Übertragung von fehlersicheren Daten zusätzlich gesteigert, da auf diese Weise zumindest zwei unabhängige Verbindungen bzw. zumindest zwei Übertragungskanäle im drahtlosen Kommunikationssystem geschaffen werden und die damit fehlersichere Daten redundant übertragen werden können. Durch die unterschiedliche Ausrichtung der zumindest zwei Übertragungsmodule kann erreicht werden, dass die Übertragungsmodule nicht die gleichen kommunikationstechnischen Bedienungen, wenn beispielsweise Licht, etc. oder Schall als Übertragungsmedium eingesetzt wird, vorfinden.

Eine zweckmäßige Weiterbildung des erfindungsgemäßen Systems sieht alternativ vor, dass die zumindest zwei Übertragungsmodule räumlich getrennt voneinander auf der Transporteinheit angebracht sind. Durch die räumlich getrennte Positionierung der zumindest zwei Übertragungsmodule wird insbesondere bei Funk basierenden Kommunikationssystemen die Wahrscheinlichkeit erhöht, dass von den zumindest zwei Übertragungsmodulen nicht die gleichen funktechnischen Bedingungen im vorgefunden werden. Dadurch wird von den Übertragungsmodulen bei einer Bewegung der Transporteinheit durch das drahtlose Kommunikationssystem üblicherweise nicht zeitgleich von einem Zugangspunkt zum nächsten Zugangspunkt, welche entlang der Bewegungsbahn angebracht sind, gewechselt.

So wird beispielsweise in einem Funk basierenden Kommunikationssystem wie z.B. Wireless LAN oder WirelessHART von einem Übertragungsmodul nur dann auf einen nächsten Zugangspunkt gewechselt, wenn ein definierter Schwellwert der Signalstärke eines aktuellen Zugangspunkt bzw. die Mindestsignalstärke unterschritten und der nächste Zugangspunkt mit einer besseren Signalstärke empfangen wird. Durch die räumliche Trennung der Übertragungsmodule wird somit sichergestellt, dass zumindest ein Übertragungsmodul mit einem Zugangspunkt verbunden bleibt und eine "Totzeit" während des sogenannten Roamingvorgangs (d.h. Wechsel des Zugangspunkts) möglichst gering ist. Idealerweise wird dabei ein erstes Übertragungsmodul an einem in Bewegungsrichtung vorderen Ende der beweglichen Einheit montiert und die Anbringung eines zweiten Übertragungsmoduls an einem in Bewegungsrichtung hinteren Ende dieser Einheit vorgesehen.

Dabei ist es auch von Vorteil, wenn die zumindest zwei Übertragungsmodule bzw. ihre Antennen bzw. Einrichtung für Empfangen/Senden des Übertragungsmediums (z.B. Funk, Licht, Laser, Infrarot, Schall, etc.) unterschiedliche Ausrichtung mit entsprechenden Charakteristiken aufweisen. Dabei sollte das erste Übertragungsmodul in Bewegungsrichtung der beweglichen (Transport-)Einheit und das zweite Übertragungsmodul entgegen der Bewegungsrichtung der (Transport-)Einheit ausgerichtet sein. Auf diese Weise wird die Fehlersicherheit des erfindungsgemäßen Systems weiter erhöht und die "Totzeit" durch Roamingvorgänge weiter reduziert. Durch die entsprechende Ausrichtung der Übertragungsmodule wird zusätzlich dafür gesorgt, dass die Übertragungsmodule über unterschiedliche Zugangspunkte Verbindungen zum drahtlosen Kommunikationssystem aufbauen. Die Zugangspunkten entlang der Bewegungsbahn bzw. deren Sende-/Empfangseinrichtungen für das jeweilige Übertragungsmedium (z.B. Funk, Licht, Laser, Infrarot, Schall, etc.) sind idealer Weise so ausgerichtet, dass von ihnen zu jeden Zeitpunkt der Bewegung der (Transport-)Einheit die an der (Transport-)Einheit räumlich getrennt angebrachten Übertragungsmodule optimal erreicht werden können.

Bei einer bevorzugten Fortbildung der Erfindung umfassen sowohl die stationäre, zentrale Kontrolleinheit als auch die Komponente zur Sicherheitssteuerung in der beweglichen, überwachten Einheit jeweils Einheiten zur Übertragung von Daten, wobei eine Einheit zur Übertragung von Daten je Übertragungskanal vorgesehen ist. Auf diese einfache Weise wird zusätzlich für eine redundante und fehlersichere Kommunikation zwischen der zentralen Kontrolleinheit und der Komponente zur Sicherheitssteuerung in der Transporteinheit gesorgt.

Es ist vorteilhaft, wenn zum Feststellen von Störungen bei einem der zumindest zwei Übertragungskanäle von den Einheiten zur Übertragung von Daten eine Fehlerfunktion ausgeführt wird. Diese Fehlerfunktion kann bei einer Störung auf einen ersten Wert (z.B. den Wert 1) gesetzt werden und nimmt bei einer störungsfreien Verbindung einen zweiten Wert (z.B. den Wert 0) an. Dabei wird auf effiziente Weise festgestellt, ob die Übertragungskanäle störungsfrei arbeiten. Für die Ausführung der Fehlerfunktion kann beispielsweise ein Fehlerausgang bei den Einheiten zur Übertragung von Daten in der zentralen Kontrolleinheit bzw. bei der Komponente zur Sicherheitssteuerung genutzt werden. Von diesem Fehlerausgang wird dann je nach dem, ob eine Störung vorliegt oder nicht, der erste Wert (z.B. der Wert 1) oder der zweite Wert (z.B. der Wert 0) angenommen.

Es ist günstig, wenn bei den Einheiten zur Übertragung von Daten eine Überwachungszeit parametriert wird. Damit wird sichergestellt, dass eine geforderte fehlersichere Reaktionszeit an den fehlersicheren Kommunikationseinheiten wie z.B. Einheiten zur Übertragung von Daten, Übertragungsmodulen, etc. des erfindungsgemäßen Systems eingehalten wird. Dabei muss die Überwachungszeit idealer Weise so groß gewählt werden, dass die Überwachungszeit durch einen Roamingvorgang nicht überschritten wird. Auf diese einfache Weise führt ein Wechsel eines Übertragungsmoduls von einem Zugangspunkt zum nächsten Zugangspunkt des drahtlosen Kommunikationssystems zu keiner Kommunikationsstörung.

Zweckmäßiger Weise werden komplexe Daten und/oder Datenpakete beim Übertragen auf einer Sendeseite mit einem Zählwert und/ oder Zeitstempel versehen. Auf diese Weise wird verhindert, dass aufgrund von Roamingvorgängen, Kommunikationsstörungen und/oder Übertragungsverzögerungen und Varianzen (z.B. Delay, Jitter, etc.) auf einem der Übertragungskanäle veralteten Daten auf der jeweiligen Empfängerseite verwendet werden.

Dabei werden in einer bevorzugten Ausgestaltung des erfindungsgemäßen Systems über eine Applikation empfangene Daten und/oder Datenpakete ausgewertet und dann festgelegt, welche Daten als gültig deklariert werden. Auf diese Weise wird sehr einfach verhindert, dass aufgrund der redundanten Übertragung - eventuell durch eine nicht synchrone Übertragung der Daten auf den beiden Übertragungskanälen z.B. wegen einer Kommunikationsstörung oder eines Roamingvorgangs - veralterte Daten von der jeweilige Einheit des erfindungsgemäßen Systems (z.B. zentrale Kontrolleinheit, Komponente zur Sicherungssteuerung) verwendet werden. Die Applikation zur Auswertung der Daten wird dabei sowohl in der zentralen Kontrolleinheit als auch in der Komponente zur Sicherheitssteuerung in der Transport implementiert, da beide Seite Daten senden und empfangen können und daher auswerten müssen.

Es empfiehlt sich wenn als drahtloses Kommunikationssystem für die Übertragung der komplexen Daten ein auf Funktechnik basiertes Kommunikationssystem eingesetzt wird. Je nach Anforderungen an Reichweite, etc. und den Gegebenheiten der jeweiligen Anwendung bzw. des jeweiligen Einsatzbereichs (z.B. People Mover, Seilbahn, Industrieanlage, Windkraftwerk, etc.) können dabei unterschiedliche Funk basierende Kommunikationssysteme eingesetzt werden - denkbar ist insbesondere die Anwendungen Mobilfunk, Wireless LAN, Bluetooth, Digital Enhanced Cordless Telecommunications (DECT), und/oder dem sogenannten WirelessHART (Highway Addressable Remote Transducer).

Mit einem Wireless LAN z.B. gemäß einem Standard aus der IEEE 802.11-Standardfamilie kann durch Anbringung von entsprechenden Zugangspunkten entlang einer Bewegungsbahn einer Transporteinheit (z.B. Güter-/Passagiertransportsystem, Seilbahn, etc.) auf einfache Weise ein durchgängiges Funknetz erzeugt werden. Ein Wireless LAN gemäß dem IEEE-Standard 802.11h oder 802.11n, welche z.B. besonders in Outdoor-Bereichen einsetzbar sind, bietet beispielsweise in einem 5 GHz-Frequenzband den Vorteil, dass es bis zu 19 überlappungsfreie Kanäle und bei entsprechenden Zugangspunkten bzw. Antennen auch eine relative große Reichweite (z.B. bis zu 1000m) aufweist.

Ist eine geringere Reichweite ausreichend bzw. im Indoor-Bereich können beispielsweise drahtlose Kommunikationssysteme auf Basis von DECT oder Bluetooth eingesetzt werden. DECT ist ein Standard insbesondere für kabellose Datenübertragung und ist im ETSI-Standard EN 300 175 definiert. Bluetooth ist ein in den 90iger Jahren entwickelter Industriestandard gemäß dem Standard IEEE 802.15.1 für Funkübertragungen zwischen Geräten über kurze Distanzen - sogenannte Wireless Personal Area Networks (WPANs). Mit Bluetooth sind insbesondere verbindungslose, verbindungsbehaftete Übertragungen von Punkt zu Punkt und sogenannte Ad-hoc-Netz oder sogenannte Piconetze möglich. Damit ist Bluetooth beispielsweise gut im Bereich industrieller Anwendungen einsetzbar.

WirelessHART ist eine Funkübertragung die auf dem drahtlosen Kommunikationsstandard IEEE 802.15.4 (ISM-Band) basiert und verwendet das sogenannte Zeitmultiplex-Verfahren (Time-Division-Multiple-Access (TDMA)) als Übertragungsverfahren. Die Kommunikation auf Basis von WirelessHART sieht auch eine Verschlüsselung auf Basis des Advanced Encryption Standards (AES 128) vor, damit Datenübertragung und Parametrierung der teilnehmenden Komponenten nicht unbefugt verändert werden kann. WirelessHART bzw. HART wird insbesondere als standardisiertes Kommunikationssystem zum Aufbau von industriellen Feldbussen eingesetzt. Typischerweise wird WirelessHART beispielsweise angewendet beim Überwachen von Sensoren, Messgeräten, etc. bei großen, zu überbrückenden Distanzen, bei Messgeräten auf rotierenden und/oder beweglichen Teilen, etc. Der Einsatz von WirelessHART weißt dabei die Vorteile auf, sich das Kommunikationssystem quasi selbst aufbaut - d.h. eine neue Komponente wird lediglich durch Eingabe einer Art Passwort bzw. Code in ein bestehendes Netz hinzugefügt und eine Topologieaufbau erfolgt dann selbstorganisierend. Durch seine Ausrichtung auf Übertragung von Daten von Messgeräten, Sensoren, etc. ist WirelessHART ideal als drahtloses Kommunikationssystem für Anwendungen im Industriebereich des erfindungsgemäßen Systems.

Bei einem Einsatz eines auf Funk basierenden drahtlosen Kommunikationssystems für die Übertragung der komplexen, sicherheitsrelevanten Daten ist es außerdem noch vorteilhaft, wenn eine Mindestsignalstärke eingehalten wird. Auf diese Weise wird eine fehlersichere Übertragung der Daten von bzw. zum beweglichen (Transport-)Einheit bzw. der Komponente zur Sicherheitssteuerung in dieser sichergestellt. Durch die Einhaltung der Mindestsignalstärke (z.B. mit ca. 81 Dezibel (dB) oder ca. 60% bei z.B. Wireless LAN) wird verhindert, dass funktechnische Phänomene wie z.B. Reflexionen, Überlagerungen oder Auslöschungen zu einer mangelhaften Versorgung in manchen Bereichen des drahtlosen Kommunikationssystems und damit zu Übertragungsfehler und/ oder wiederholten Sendungen der komplexe Daten führen.

Zusätzlich kann die Übertragungsqualität besonders bei mobilen Funkanwendungen durch sogenannte Antennendiversität verbessert werden. Antennendiversität bezeichnet ein Verfahren, bei dem mehrere Antennen pro Sender oder Empfänger verwendet werden, um Interferenz-Effekte bei der Funkübertragung zu reduzieren.

Es ist aber auch günstig, wenn als drahtloses Kommunikationssystem für die Übertragung der komplexen Daten ein auf Licht basiertes Kommunikationssystem - wie z.B. Laser oder Infrarot, und/oder ein auf Schallwellen basiertes Kommunikationssystem zum Einsatz kommt. Durch die Verwendung dieser Übertragungsmedien kann das erfindungsgemäße System ideal an die jeweilige Anwendung bzw. deren Vorgaben angepasst werden.

So gibt es beispielsweise bei Infrarot als Übertragungsmedium die sogenannte Infrared Data Association (IrDA), von welcher Standard für optische drahtlose Punkt-zu-Punkt-Datenübertragung mittels infraroten Lichts (850 - 900 nm) spezifiziert wurden. Infrarotes Licht kann idealer Weise im Nachbereich bei Reichweiten von unter einem Meter als Übertragungsmedium eingesetzt werden - wie z.B. im Bereich der Personal Area Networks (z.B. bei Laptops, Kameras, etc. im Privatbereich, bei Datenloggern und/oder Wartungen von Boardcomputern im Industriebereich und/oder im Medizinbereich bei telemedizinischen Geräten). Der Vorteil von IrDA-Standards sind ein vergleichsweise hoher Datendurchsatz, hohe Abhörsicherheit, ein geringer Energieverbrauch und eine relativ hohe Zuverlässigkeit.

Auch Laser kann als Übertragungsmedium von Daten eingesetzt werden. Derzeit wird Laser als Übertragungsmedium insbesondere in der Datenfernübertragung wie z.B. beim optischen Richtfunk oder der optischen Freiraumdatenübertragung eingesetzt. Dabei bietet Laser Vorteile wie z.B. hohe Datenrate, im engen Lichtstrahl begründete hohe Datensicherheit, relativ raschen Aufbau des Kommunikationssystems, etc. Auch Witterungsverhältnisse wie Regen oder Schnee haben relativ geringen Einfluss auf die Datenübertragung mittels Lasers.

Es ist besonders günstig, wenn als Kommunikationsstandard das sogenannte PROFINET oder Process Field Network, insbesondere für die Kommunikation innerhalb der zentralen Kontrolleinheit und innerhalb der beweglichen (Transport-)Einheit bzw. zwischen Übertragungsmodulen, Koppelmodul und Komponente zur Sicherheitssteuerung in dieser, eingesetzt wird. PROFINET ist ein offener Industrie-Standard, welcher von PROFIBUS & PROFINET International (PI) - einem Dachverband von 25 regionalen PROFIBUS Organisationen - definiert wird und seit ca. 2003 Teil der Normen IEC 61158 und IEC 61784-2 ist, in welche sogenannte Feldbusse für industrielle Anwendungen und bei Einsatz im Echtzeit-Ethernet standardisiert sind. PROFINET wird für das sogenannte Ethernet, welches häufig für lokale kabelgebundene Netz, insbesondere Local Area Networks (LAN) verwendet wird, und für Automatisierungen eingesetzt. Für PROFINET wird das Transmission Control Protocol/Internet Protocol (TCP/IP) genutzt. Es ist Echtzeit-Ethernet fähig und modular aufgebaut.

Bei PROFINET gibt es zwei Sichtweisen: PROFINET CBA und PROFINET IO. PROFINET CAB wird für Komponenten basierte Automatisierung bzw. Kommunikation über TCP/IP, insbesondere bei Echtzeit-Kommunikation in modular aufgebauten Anlagen eingesetzt. PROFINET IO ist für eine Echtzeit- und taktsynchrone Kommunikation zwischen einer zentralen Kontrolleinheit und einer dezentralen Peripherie geschaffen worden. Daher wird im erfindungsgemäßen System bevorzugt PROFINET IO eingesetzt, welches den zusätzlichen Vorteil bietet, für eine fehlersichere Kommunikation der sogenannte PROFIsafe-Standard oder PROFIBUS safety oder PROFINET safety-Standard verwendet werden kann, durch welchen Sicherheitsaspekte für die Kommunikation in Automatisierungssystemen in den PROFINET-Standard integriert worden ist. Dabei kann PROFIsafe gemäß der IEC-Norm 61508 in sicherheitsrelevanten Anwendungen bzw. Systemen bis zu einem Sicherheits-Integritätslevel (SIL) der Stufe 3 eingesetzt werden.

### Kurzbeschreibung der Zeichnung

Die Erfindung wird nachfolgend in beispielhafter Weise anhand der beigefügten Figuren erläutert. Es zeigen:
- Figur 1: schematisch einen beispielhaften Aufbau des erfindungsgemäßen Systems zur fehlersicheren und redundanten Übertragung von komplexen Daten
- Figur 2: schematisch und beispielhaft einen Ablauf eines Verbindungsaufbaus und von Roamingvorgängen im erfindungsgemäßen System anhand einer besonders geeigneten Anwendung im Bereich des Transports von Personen und/oder Gütern

### Ausführung der Erfindung

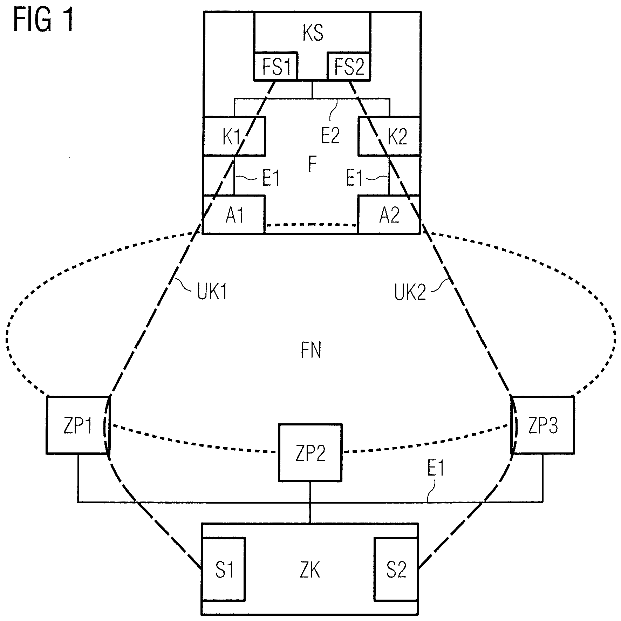

In der Figur 1 ist schematisch und beispielhaft das erfindungsgemäße System zur fehlersicheren und redundanten Übertragung von komplexen Daten dargestellt. Über das erfindungsgemäße System werden insbesondere sicherheitsrelevante Steuerdaten und/oder andere komplexe Daten wie z.B. Audio- und/oder Videodaten (z.B. Voice-over-IP-Daten, CCTV-Daten, etc.) zwischen einer zentralen Kontrolleinheit ZK und einer beweglichen Transporteinheit F wie z.B. einem Transportsystem für Personen und/oder Güter, einem fahrerlosen Fahrzeug, einer Kabine einer Berg- und/oder Seilbahn, einem People Mover, etc. ausgetauscht. Es ist aber auch denkbar, dass das erfindungsgemäße System im Industrie- und/oder energietechnischen Bereich zum Einsatz kommt - wie z.B. bei einem Rotor als bewegliche Einheit F und einem unbeweglichen Teil (z.B. Turm, Gondel, etc.) als stationäre Kontrolleinheit ZK einer Windkraftanlage.

Die zentrale Kontrolleinheit ZK ist dabei z.B. in einer Station des Transportsystems für Güter und/oder Personen untergebracht. Bei Berg- und/oder Seilbahnen kann die zentrale Kontrolleinheit ZK beispielsweise in einer Bergstation angebracht sein. Bei einer Anwendung im Industriebereich kann sich die Kontrolleinheit ZK beispielsweise auch in einer Steuerzentrale, bei einem Antrieb, etc. befinden. Die zentrale Kontrolleinheit ZK weist für eine bidirektionale fehlersichere Kommunikation mit dem Fahrzeug F zumindest zwei Steuerungsmodule S1, S2 auf, welche jeweils eine Einheit für die Übertragung von komplexen Daten umfassen. Das bedeutet, dass in der zentralen Kontrolleinheit ZK pro vorgesehenen Übertragungskanal UK1, UK2 eine Einheit zur Übertragung von komplexen Daten (d.h. zum Senden und Empfangen dieser Daten) vorgesehen ist.

Die zentrale Kontrolleinheit ZK ist über ein erstes Kommunikationsnetzwerk E1, welche beispielsweise nach dem Ethernet-Standard ausgeführt ist, mit beispielhaften Zugangspunkten ZP1, ZP2, ZP3 eines drahtlosen Kommunikationssystem FN verbunden. Die Zugangspunkte ZP1, ZP2, ZP3 sind entlang einer Bewegungsbahn der beweglichen Transporteinheit F angebracht. Beim Einsatz im Personen- und/oder Gütertransport können auch Stationen der beweglichen Transporteinheit F Zugangspunkte ZP1, ZP2, ZP3 aufweisen. Für eine Anzahl der angebrachten Zugangspunkte ZP1, ZP2, ZP3 gibt es üblicherweise keine zahlenmäßige Beschränkung. Es werden meist so viele Zugangspunkte ZP1, ZP2, ZP3 entlang der Bewegungsbahn installiert, wie für eine gute Abdeckung und eine störungsfreie Funktionsweise der Bewegungsbahn durch das drahtlose Kommunikationssystem FN notwendig sind.

Die Zugangspunkte ZP1, ZP2, ZP3 können beispielsweise beim Einsatz von Wireless LAN als sogenannte Wireless Access Point ausgestaltet sein und damit entlang der Bewegungsbahn der beweglichen Transporteinheit F sogenannte Wireless LAN-Funkzellen bzw. ein Wireless LAN-Funknetz FN aufbauen. Zum Aufbau des drahtlosen Kommunikationssystems FN kann beispielsweise ein Wireless LAN gemäß der IEEE-StandardFamilie 802.11 verwendet werden - wie z.B. der der Standard IEEE 802.11h, welcher vor allem für Funknetze FN in Outdoor-Bereichen einsetzbar ist, und der z.B. in einem 5GHz-Frequenzband bis zu 19 überlappungsfreie Kanäle und bei entsprechenden Zugangspunkten ZP1, ZP2, ZP3 auch eine relative große Reichweite (z.B. bis zu 1000m) aufweist.

Alternativ können allerdings je nach Anforderungen an Reichweite, Abhörsicherheit, etc. und Anwendung des erfindungsgemäßen Systems auch andere Funktechnologien wie z.B. Mobilfunk, DECT, Bluetooth, WirelessHART, etc. oder alternative Übertragungsmedien wie z.B. Licht, Infrarot, Laser, Schallwellen, etc. eingesetzt werden.

Bei der Planung des drahtlosen Kommunikationssystems FN, insbesondere des Wireless LANs, sollte zusätzlich berücksichtigt werden, dass das endgültige drahtlosen Kommunikationssystems FN entlang der Bewegungsbahn keine Bereiche enthält, welche aufgrund von technischen Phänomenen wie z.B. Reflexionen, Überlagerungen oder Auslöschungen schlechter versorgt werden. Für eine fehlersichere Übertragung von Daten über beispielsweise ein Funk basiertes Kommunikationssystem FN ist daher eine Mindestsignalstärke (z.B. von ca. 81dB bzw. 60%) einzuhalten, damit durch z.B. Übertragungsfehler und/oder Paketwiederholungen die für das System geforderte Reaktionszeit nicht überschritten wird.

Zusätzlich kann z.B. im drahtlosen Kommunikationssystems FN nach dem Wireless LAN-Standard noch die sogenannte industrial Point Coordination Function (iPCF) oder Rapid Roaming implementiert werden, welche eine Erweiterung der Standardfamilie IEEE 802.11 darstellt und von welchem in einer Wireless LAN Infrastruktur Roamingzeiten von ca. 50ms ermöglicht werden. Diese proprietäre Verfahren muss sowohl von den Zugangspunkten ZP1, ZP2, ZP3 als auch von Übertragungsmodulen A1, A2 an der beweglichen Transporteinheit F unterstützt werden.

Die bewegliche Transporteinheit F umfasst für eine Bearbeitung und zum Erstellen von komplexen Daten eine Komponente zur Sicherheitssteuerung KS. Diese Komponente zur Sicherheitssteuerung KS weist für die bidirektionale, fehlersichere Kommunikation mit der zentralen Kontrolleinheit ZK zumindest zwei Steuermodule FS1, FS2 auf, welchen jeweils eine Einheit zur Übertragung von komplexen Daten umfassen. Auf diese Weise kann zwischen der zentralen Kontrolleinheit ZK und der Komponente zur Sicherheitssteuerung KS nicht nur eine bidirektionale, sondern auch eine redundante Kommunikation über zwei Übertragungskanäle UK1, UK2 aufgebaut werden.

Für die Kommunikation über das drahtlosen Kommunikationssystems FN sind an der beweglichen Transporteinheit F Übertragungsmodule A1, A2 (z.B. Wireless LAN-Clientmodule, etc.) angebracht. Um die Verfügbarkeit der Übertragung der komplexen Daten zu erhöhen, werden zumindest zwei Übertragungsmodule A1 und A2 eingesetzt. Damit werden zwei parallel und unabhängig Übertragungskanäle UK1 und UK2 zwischen der zentralen Kontrolleinheit ZK und der Komponenten zur Sicherheitsteuerung KS aufgebaut. Damit zumindest immer einer der Übertragungskanäle UK1, UK2 die für die Datenübertragung erforderliche Qualität aufweist, können die Übertragungsmodule A1, A2 räumlich voneinander getrennt an der Transporteinheit F angebracht sein. So kann beispielsweise ein erstes Übertragungsmodul A1 an einem in Bewegungsrichtung vorderen Ende der Transporteinheit F montiert sein und ein zweites Übertragungsmodul A2 ist an einem in Bewegungsrichtung hinteren Ende der Transporteinheit F festgemacht.

Neben der räumlichen Trennung der Übertragungsmodule A1, A2 können beispielsweise Ausrichtung und Charakteristik der Module A1, A2 als Sender und/oder Empfänger entsprechend gewählt werden. So kann beispielsweise das erste Übertragungsmodul A1 eine in Bewegungsrichtung der Transporteinheit F gerichtete Charakteristik aufweisen, von welcher z.B. leicht eine Verbindung mit einem Zugangspunkt ZP1 aufgebaut werden kann, welcher in Bewegungsrichtung vor der Transporteinheit F angebracht ist. Das zweite Übertragungsmodul A2 kann beispielsweise eine Charakteristik haben, welche entgegen der Bewegungsrichtung ausgerichtet ist. Damit wird vom zweiten Übertragungsmodul A2 leichter eine Verbindung zu einem Zugangspunkt ZP3 aufgebaut, welche in Bewegungsrichtung bereits hinter der Transporteinheit F liegt bzw. welchen von der Transporteinheit F bereits passiert worden ist.

Zusätzlich ist auf den Übertragungsmodulen A1, A2 das sogenannte Layer-2-Tunnel-Protokoll implementiert, durch welches ein virtuelles privates Netz hergestellt wird. Damit wird das erste Kommunikationsnetzwerk E1 um Teile eines Datennetzes z.B. nach dem Ethernet-Standard in der Transporteinheit F erweitert. Es können von den Übertragungsmodulen A1, A2 dadurch bis zu acht Netzwerkadressen - sogenannte MAC-Adressen - verwaltet werden. Durch den Einsatz des Layer-2-Tunnel-Protokolls kann auch festgelegt werden, über welches Übertragungsmodul A1, A2 welcher Übertragungskanal UK1, UK2 läuft. Damit bleibt die Zuordnung der Übertragungskanäle UK1, UK2 immer eindeutig, selbst wenn beide Übertragungsmodule A1, A2 im selben Zugangspunkt ZP1, ZP2, ZP3 eingebucht sein sollten.

Als Kommunikationsstandard wird im erfindungsgemäßen System, welches z.B. sowohl ein drahtloses Kommunikationssystem FN wie z.B. Wireless LAN als auch Kommunikationsnetze nach dem Ethernet-Standard aufweist, das sogenannte PROFINET IO eingesetzt. PROFINET IO ist vor allem für eine Echtzeit- und taktsynchrone Kommunikation zwischen zentralen Kontrolleinheiten ZK und dezentraler Peripherie geschaffen worden. Zusätzlich wird für die fehlersichere Kommunikation bzw. Übertragung der komplexen Daten auch der sogenannte PROFIsafe-Standard verwendet.

Für einen Einsatz von PROFINET IO ist bei einer redundanten Konstellation allerdings eine Netzentkopplung bzw. eine vollständige logische Trennung zwischen den beiden Übertragungsmodule A1, A2 notwendig, um sogenannte Netzwerkschleifen zwischen der Transporteinheit F und dem ersten Kommunikationsnetzwerk E1 der Zugangspunkte-Infrastruktur zu vermeiden. Daher sind in der Transporteinheit F zwischen der Komponente zur Sicherheitssteuerung KS und den Übertragungsmodulen A1, A2 jeweils Koppelmodule K1, K2 vorgesehen. Durch die Koppelmodule K1 und K2 wird das erste Kommunikationsnetzwerk E1, an welches jeweils die Übertragungsmodule A1, A2 angeschlossen sind, von einem zweiten Kommunikationsnetzwerk E2, welches z.B. ebenfalls nach dem Ethernet-Standard ausgeführt sein kann, getrennt. Über das Kommunikationsnetzwerk E2 sind die Koppelmodule K1, K2 mit der Komponente zur Sicherheitssteuerung KS verbunden. Als Koppelmodule K1, K2 können beispielsweise sogenannte PN/PN-Koppler eingesetzt werden, durch welche z.B. zwei PROFINET-Netze entkoppelt werden können.

Durch den Einsatz der Koppelmodule K1, K2 wird eine fehlersichere Kommunikation zwischen der zentralen Kontrolleinheit ZK bzw. ihrer Einheit zum Übertragen von Daten und der Komponenten zur Sicherheitssteuerung KS bzw. der dort angebrachten Einheit zum Übertragen von Daten über zwei parallel und vollständig getrennte Übertragungskanäle UK1, UK2 aufgebaut. Durch die räumlich getrennte Anbringung der Übertragungsmodule A1, A2 wird zusätzlich sichergestellt, dass jedes Übertragungsmodul A1, A2 mit einem unterschiedlichen Zugangspunkt ZP1, ZP2, ZP3 verbunden ist und damit jeder Übertragungskanal UK1, UK2 über einen eigenen Weg geführt wird. Auf diese Weise können die komplexen Daten nicht nur fehlersicher, sondern auch redundant übertragen werden.

Aufgrund der redundanten Übertragung der komplexen Daten muss mit Hilfe von einer Applikation, welche sowohl in der zentralen Kontrolleinheit ZK als auch in der Komponente zur Sicherheitssteuerung KS beispielsweise in den jeweiligen fehlersicheren Einheiten zum Übertragen von Daten (z.B. Datensende- und Empfangseinheiten) implementiert ist, sichergestellt werden, welche gesendeten und/oder empfangenen komplexe Daten als gültig deklariert werden. Solange beispielsweise beide Übertragungskanäle UK1, UK2 aktiv sind bzw. keine Störung eines der Übertragungskanäle UK1, UK2 identifiziert worden ist, kann einer der Übertragungskanäle UK1, UK2 als bevorzugte Verbindung für die Datenübertragung deklariert werden. Die Verbindung über den anderen Übertragungskanal UK1, UK2 wird dann als sogenannte Back-Up-Verbindung genutzt. Tritt z.B. auf einem ersten Übertragungskanal UK1 eine Störung auf, so wird auf einen zweiten Übertragungskanal UK2 gewechselt. Die Verbindung über den zweiten Übertragungskanal UK2 kann dann beispielsweise solange aktiv bleiben, bis auf diesem eine Störung festgestellt wird. Dann wird z.B. wieder auf den ersten Übertragungskanal UK1 zurückgewechselt.

Zum Feststellen, ob auf einem der Übertragungskanäle UK1, UK2 eine Störung vorliegt, kann beispielsweise sowohl einer Einheit zur Übertragung von Daten (z.B. Datensende- und/oder -empangseinheit) in der zentralen Kontrolleinheit ZK sowie in der Komponente zur Sicherheitssteuerung KS eine Fehlerfunktion vorgesehen sein. Durch diese Fehlerfunktion wird bei einer festgestellten Störung z.B. von einem speziellen Fehlerausgang der jeweiligen Einheit zum Übertragen von Daten ein erster Wert - beispielsweise der Wert 1 - angenommen. Ist die Störung auf dem jeweiligen Übertragungskanal UK1, UK2 beseitigt, so wird der Wert dieses Fehlerausgangs auf einen zweiten Wert wie z.B. den Wert 0 zurückgesetzt.

Zusätzlich wird für eine Einhaltung einer geforderten bzw. für Sicherheitsstandards notwendigen, fehlersicheren Reaktionszeit in den entsprechenden Einheiten - wie z.B. den Einheiten zum Übertragen von Daten in der zentralen Kontrolleinheit ZK und in der Komponente zur Sicherheitssteuerung KS - eine entsprechend Überwachungszeit parametriert. Diese Überwachungszeit kann beispielsweise nach dem PROFIsafe-Standard festgelegt werden und ist insbesondere so groß zu wählen, dass sie durch die Dauer eines Roamingvorgangs nicht verletzt wird, da sonst z.B. bei jedem Roamingvorgang Kommunikationsstörungen auftreten können.

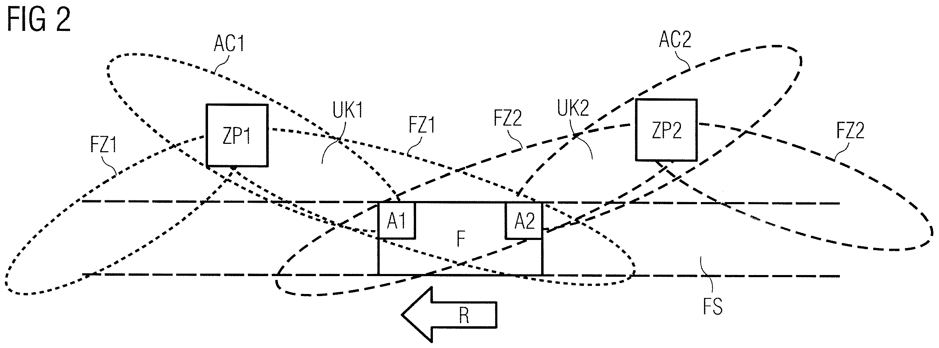

Außerdem können die zu übertragenden komplexen Daten beispielsweise mit Zählwerten und/oder Zeitstempeln versehen werden, um auf einer Empfangsseite veraltete komplexe Daten bzw. Datenpakete ausfiltern zu können. Veraltete Daten können beispielsweise durch nicht synchrone Übertragung der Daten auf den Übertragungskanälen UK1, UK2 entstehen. Die nicht synchrone Datenübertragung wird beispielsweise durch Roamingvorgänge, welche beispielhaft im Folgenden anhand von Figur 2 beschrieben werden, oder durch funktechnische Verzögerungen und/oder Varianzen wie z.B. sogenannte Delays und/oder Jitter ausgelöst.

Figur 2 zeigt schematisch und beispielhaft einen Ablauf eines Verbindungsaufbaus und von Roamingvorgängen im erfindungsgemäßen System anhand einer besonders vorteilhaften Anwendung im Bereich des Transports von Personen und/oder Gütern, insbesondere bei Berg-/Seilbahnen bzw. People Movern. Dabei ist wieder eine beispielhafte Transporteinheit F (z.B. Gondel der Berg-/Seilbahn, Kabine, etc.) dargestellt, welche sich entlang einer Bewegungsbahn FS bzw. durch z.B. Schienen, Seil, etc. vorgegebenen Fahrtstrecke FS in einen Bewegungsrichtung R bewegt. Die Transporteinheit F umfasst dabei wieder zwei Übertragungsmodule A1, A2, wobei das erste Übertragungsmodul A1 am in Bewegungsrichtung R vorderen Ende der Transporteinheit F und das zweite Übertragungsmodul A2 am in Bewegungsrichtung R hinteren Ende der Transporteinheit F angebracht sind. Die Übertragungsmodule A1, A2 weisen unterschiedliche Ausrichtungen mit entsprechenden Sende-/Empfangscharakteristiken AC1, AC2 bzw. Antennencharakteristiken AC1, AC2 auf. Dabei ist das erste Übertragungsmodul A1 so ausgerichtet, dass die zugehörige Antennencharakteristik AC1 in Bewegungsrichtung R weist. Das zweite Übertragungsmodul A2 weist eine Ausrichtung auf, bei welcher die zugehörige Antennencharakteristik AC2 entgegen der Bewegungsrichtung R ausrichtet ist.

Entlang der Bewegungsbahn bzw. Fahrtstrecke FS sind beispielhaft Zugangspunkte ZP1, ZP2 eines drahtlosen Kommunikationssystems FN (z.B. Wireless LAN, etc.) vorgesehen, von welchen aufgrund der Ausrichtung ihrer Antennen Zugangsbereiche FZ1, FZ2 zum Kommunikationssystem FN gebildet werden. Diese Zugangsbereiche FZ1, FZ2 werden bei Funk basierten Kommunikationssystemen FN wie z.B. Wireless LAN auch als Funkzellen FZ1, FZ2 bezeichnet. Von diesen Zugangsbereichen bzw.

Funkzellen FZ1, FZ2 wird dann das drahtlose Kommunikationssystem FN gebildet, durch welches die Bewegungsbahn FS der Transporteinheit F für die Datenübertragung abgedeckt wird. Als Zugangspunkte ZP1, ZP2 können z.B. bei Wireless LAN sogenannte Access Points eingesetzt werden, durch welche ein Wireless LAN-Funknetz FN entlang der Bewegungsbahn FS der Transporteinheit F entsteht.

Durch die jeweiligen Überlappungen der Antennencharakteristiken AC1, AC2 mit den Zugangsbereichen bzw. Funkzellen FZ1, FZ2 werden die entsprechenden Übertragungskanäle UK1, UK2 für die fehlersichere und redundante Übertragung der komplexen Daten über das drahtlose Kommunikationssystem FN gebildet. Vom Zugangsbereich bzw. von der Funkzelle FZ1 eines in Bewegungsrichtung R liegenden Zugangspunkts ZP1 wird mit dem ersten Übertragungsmodul A1 der erste Übertragungskanal UK1 gebildet. Vom Zugangsbereich bzw. von der Funkzelle FZ2 des in Bewegungsrichtung R hinter dem Fahrzeug F liegenden Zugangpunkt ZP2 wird mit dem zweiten Übertragungsmodule A2 der zweite Übertragungskanal UK2 bewirkt.

Wird nun das mittels der beispielhaften Zugangspunkte ZP1, ZP2 gebildete drahtlose Kommunikationssystem FN von der Transporteinheit F durchfahren, so wird der in Bewegungsrichtung R liegenden Zugangspunkt ZP1 vom ersten Übertragungsmodul A1 am vorderen Ende der Transporteinheit F immer stärker wahrgenommen. D.h. die vom ersten Übertragungsmodul A1 festgestellte Signalstärke des in Bewegungsrichtung FS liegenden Zugangspunkts ZP1 nimmt ständig zu. Das am Ende der Transporteinheit F angebrachte zweite Übertragungsmodul A2 entfernt sich hingegen immer mehr vom in Bewegungsrichtung R hinter der Transporteinheit F liegenden Zugangspunkt ZP2, wobei die Signalstärke für das zweite Übertragungsmodul A2 ständig abnimmt. Dabei darf allerdings für eine gesicherte Übertragung der komplexen Daten die Signalstärke nicht unter die festgelegte Mindestsignalstärke - z.B. 60% der üblichen Signalstärke - fallen.

Wird nun von der Transporteinheit F ein Zugangspunkt ZP1, ZP2 passiert, so steigt für das erste Übertragungsmodul A1 die Signalstärke bis zum Erreichen des Zugangspunkt ZP1, ZP2 kontinuierlich an und sinkt mit dem Passieren des Zugangspunkts ZP1, ZP2 wieder ab - bis ein sogenannter Roamingschwellwert - d.h. die geforderte Mindestsignalstärke nicht mehr eingehalten wird. Vom ersten Übertragungsmodul A1 wird dann der nächste in Bewegungsrichtung R der Transporteinheit F liegende Zugangspunkt ZP1 erkannt und eine Verbindung bzw. ein erster Übertragungskanal UK1 mit diesem Zugangspunkt ZP1 aufgebaut.

Für das am hinteren Ende der Transporteinheit F angebrachte, zweite Übertragungsmodul A2 nimmt eine Entfernung zum in Bewegungsrichtung R hinter der Transporteinheit F liegenden Zugangspunkt ZP2, zu welchen vom zweiten Übertragungsmodul A2 eine Verbindung bzw. der zweite Übertragungskanal UK2 besteht, hingegen immer mehr zu. D.h. auch die Signalstärke, die vom zweiten Übertragungsmodul A2 festgestellt wird, nimmt kontinuierlich ab - bis der Roamingschwellwert erreicht worden ist. Erst wenn die Transporteinheit F einen weiteren Zugangspunkt ZP1, ZP2 passiert hat, wird vom zweiten Übertragungsmodul A2 ein alternativer Zugangspunkt ZP1, ZP2 für einen Verbindungsaufbau mit entsprechender Signalstärke wahrgenommen und der zweite Übertragungskanal UK2 zu diesem wieder aufgebaut.

Diese Vorgehensweise hat damit den Vorteil, dass im erfindungsgemäßen System zu keinem Zeitpunkt von beiden Übertragungsmodulen A1, A2 gleichzeitig der Zugangspunkt ZP1, ZP2 zum Aufbau des jeweiligen Übertragungskanals UK1, UK2 gewechselt wird. Die Roamingvorgänge werden sequenziell - d.h. hintereinander - durchgeführt, wodurch die redundante Verbindung nicht beeinträchtigt wird.

Gelangt nun die Transporteinheit F beispielsweise in eine Station des Transportsystems, so muss in der Station beispielsweise durch entsprechend Planung der Abdeckung durch das Kommunikationssystem FN dafür gesorgt sein, dass die Übertragungskanäle UK1, UK2 überlappungsfrei sind. Dies wird insbesondere durch den Einsatz des Layer-2-Tunnel-Protokolls erzielt, welches eine eindeutige Zuordnung der Übertragungskanäle UK1, UK2 zu den jeweiligen Übertragungsmodulen A1, A2 und den entsprechenden Koppelmodulen K1, K2 ermöglicht. Damit ist sowohl auf der Bewegungsbahn FS der Transporteinheit F als auch an einem Haltepunkt dieser Einheit F immer für eine fehlersichere und redundante Übertragung der komplexe Daten zwischen zentraler Kontrolleinheit ZK und Komponente zur Sicherheitssteuerung KS in der beweglichen Transporteinheit F gesorgt.
Das erfindungsgemäße System kann auf einfache und ideale Weise - wie in den Figuren 1 und 2, vor allem in Figur 2 dargestellt - im Bereich des Transports von Personen und/oder Gütern eingesetzt werden. Besonders für eine Sicherheits-überwachung und -steuerung von Personentransportsystemen wie z.B. People Mover, Berg- und Seilbahnen, fahrerlose Systeme, etc. kann es auf einfache Weise verwendet werden. Das erfindungsgemäße System ist aber auch für eine Überwachung von Gütertransporten, insbesondere von Gefahrengütern in fahrerlosen Systemen anwendbar.

Es ist aber auch denkbar, dass das erfindungsgemäße System im Industrie- und/oder energietechnischen Bereich zum Einsatz kommt. Zum Beispiel kann das erfindungsgemäße System auch zur Überwachung und Steuerung eines Rotors einer Windkraftanlage eingesetzt werden. Der Rotor ist dabei sozusagen die bewegliche (Transport-)Einheit F, welche sich auf einer rotierenden Kurvenbahn durch das drahtlose Kommunikationssystem FN bewegt und eine Komponente zur Sicherheitssteuerung aufweist. Die zentrale, stationäre Kontrolleinheit kann dann z.B. in einem stationären Teil der Windkraftanlage selbst (z.B. Turm, Gondel, etc.) oder in einer zentralen Steuer- und Überwachungszentrale z.B. für einen gesamten Windpark untergebracht sein. Als drahtloses Kommunikationssystem FN wäre dabei beispielsweise WirelessHART denkbar.

## Patentansprüche

1. System zur fehlersicheren und redundanten Übertragung von komplexen Daten, insbesondere Steuerdaten, Audio- und/ oder Videodaten, zwischen einer stationären, zentralen Kontrolleinheit (ZK) und einer Komponente zur Sicherheitssteuerung (KS) in einer beweglichen Transporteinheit (F) über ein drahtloses Kommunikationssystem (FN), welches mehrere Zugangspunkten (ZP1, ZP2, ZP3) aufweist, mit folgenden Merkmalen:
- entlang einer Bewegungsbahn (FS) der beweglichen Transporteinheit (F) sind Zugangspunkte (ZP1, ZP2, ZP3) zum drahtloses Kommunikationssystem (FN) vorgesehen,
- für eine Kommunikation mit den Zugangspunkten (ZP1, ZP2, ZP3) sind an der beweglichen Transporteinheit zumindest zwei Übertragungsmodule (A1, A2) angebracht, auf denen das sogenannte Layer-2-Tunnel-Protokoll implementiert ist, durch welches ein virtuelles privates Netz hergestellt wird,
- eine Übertragung der komplexen Daten zwischen der zentralen Kontrolleinheit (ZK) und den zumindest zwei Übertragungsmodule (A1, A2) wird parallel über zumindest zwei getrennte Übertragungskanäle (UK1, UK2) des drahtlosen Kommunikationssystems (FN) durchgeführt,
- wobei jeweils einer der zumindest zwei getrennten Übertragungskanäle (UK1, UK2) einem der zumindest zwei Übertragungsmodule (A1, A2) zugeordnet ist,
- eine Ankopplung der zumindest zwei Übertragungsmodule (A1, A2) an die Komponente zur Sicherheitssteuerung (KS) der beweglichen Transporteinheit (F) wird über jeweils ein Koppelmodul (K1, K2) durchgeführt und
- die zumindest zwei Übertragungsmodule (A1, A2) sind mit unterschiedlicher Ausrichtung und entsprechenden Sende-/Empfangscharakteristiken bzw. Antennencharakteristiken (AC1, AC2) räumlich getrennt voneinander auf der Transporteinheit (F) in der Weise angebracht, dass zu keinem Zeitpunkt von beiden Übertragungsmodulen (A1, A2) gleichzeitig der Zugangspunkt (ZP1, ZP2) zum Aufbau des jeweiligen Übertragungskanals (UK1, UK2) gewechselt wird.

2. System nach Anspruch 1, **dadurch gekennzeichnet, dass** die Anbringung eines ersten Übertragungsmoduls (Al) an einem in Bewegungsrichtung (R) vorderen Ende der Transporteinheit (F) und die Anbringung eines zweiten Übertragungsmoduls (A2) an einem in Bewegungsrichtung (R) hinteren Ende der Transporteinheit (F) vorgesehen ist.

3. System nach einem der vorangegangenen Ansprüche, **dadurch gekennzeichnet, dass** die zumindest zwei Übertragungsmodule (A1, A2) unterschiedliche Ausrichtung mit entsprechenden Charakteristiken aufweisen, wobei das erste Übertragungsmodul (A1) in Bewegungsrichtung (R) der Transporteinheit (F) und das zweite Übertragungsmodul (A2) entgegen die Bewegungsrichtung (R) der Transporteinheit (F) ausgerichtet ist.

4. System nach einem der Ansprüche 1 bis 3, **dadurch gekennzeichnet, dass** die zentrale Kontrolleinheit (ZK) und die Komponente zur Sicherheitssteuerung (KS) in der Transporteinheit (F) jeweils Einheiten zur Übertragung von Daten umfassen, wobei jeweils eine Einheit zur Übertragung von Daten je Übertragungskanal (UK1, UK2) vorgesehen ist.

5. System nach einem der Ansprüche 1 bis 4, **dadurch gekennzeichnet, dass** zum Feststellen von Störungen bei einem der zumindest zwei Übertragungskanäle (UK1, UK2) von den Einheiten zur Übertragung von Daten eine Fehlerfunktion ausgeführt wird, welche bei einer Störung auf einen ersten Wert gesetzt wird, und von welcher bei störungsfreier Verbindung ein zweiter Wert angenommen wird.

6. System nach einem der Ansprüche 1 bis 5, **dadurch gekennzeichnet, dass** bei den Einheiten zur Übertragung von Daten eine Überwachungszeit parametriert wird.

7. System nach einem der Ansprüche 1 bis 6, **dadurch gekennzeichnet, dass** komplexe Daten und/oder Datenpakete beim Übertragen auf einer Sendeseite mit einem Zählwert und/oder Zeitstempel versehen werden.

8. System nach einem der Ansprüche 1 bis 7, **dadurch gekennzeichnet, dass** über eine Applikation empfangene Daten und/oder Datenpakete ausgewertet werden und dann festgelegt wird, welche Daten als gültig deklariert werden.

9. System nach einem der Ansprüche 1 bis 8, **dadurch gekennzeichnet, dass** als drahtloses Kommunikationssystem (FN) für die Übertragung der komplexen Daten ein auf Funktechnik basierendes Kommunikationssystem, insbesondere auf Basis von Mobilfunk, Wireless LAN, Bluetooth, DECT und/oder sogenanntes Wireless HART, eingesetzt wird.

10. System nach einem der Ansprüche 1 bis 9, **dadurch gekennzeichnet, dass** als drahtloses Kommunikationssystem (FN) für die Übertragung der komplexen Daten Kommunikationssystem auf Basis von Licht, Laser oder Infrarot, und/oder ein auf Schallwellen basierendes Kommunikationssystem eingesetzt wird.

11. System nach einem der Ansprüche 1 bis 10, **dadurch gekennzeichnet, dass** als Kommunikationsstandard das sogenannte PROFINET vorgesehen ist.

## Claims

1. System for failsafe and redundant transmission of complex data, in particular control data, audio and/or video data, between a stationary, central control unit (ZK) and a component for safety control (KS) in a movable transport unit (F) via a wireless communication system (FN), which has a plurality of access points (ZP1, ZP2, ZP3), with the following features:
- access points (ZP1, ZP2, ZP3) to the wireless communication system (FN) are provided along a motion path (FS) of the movable transport unit (F),
- at least two transmission modules (A1, A2) are attached to the movable transport unit for communication with the access points (ZP1, ZP2, ZP3), on which transmission modules the so-called Layer 2 Tunnel Protocol is implemented, by which a virtual private network is created,
- a transmission of the complex data between the central control unit (ZK) and the at least two transmission modules (A1, A2) is carried out in parallel via at least two separate transmission channels (UK1, UK2) of the wireless communication system (FN),
- wherein in each case one of the at least two separate transmission channels (UK1, UK2) is assigned to one of the at least two transmission modules (A1, A2),
- a coupling of the at least two transmission modules (A1, A2) to the components for safety control (KS) of the movable transport unit (F) is carried out via a coupling module (K1, K2) in each case and
- the at least two transmission modules (A1, A2) are attached to the transport unit (F) spatially separated from one another with different alignment and corresponding transmitting/receiving characteristics and antenna characteristics (AC1, AC2) in such a way that there is no point in time at which both transmission modules (A1, A2) change the access point (ZP1, ZP2) for forming the respective transmission channel (UK1, UK2) at the same time.

2. System according to claim 1, **characterised in that** there is provision for the attachment of a first transmission module (A1) to a front end of the transport unit (F) in the direction of motion (R) and the attachment of a second transmission module (A2) to a rear end of the transport unit (F) in the direction of motion (R).

3. System according to one of the preceding claims, **characterised in that** the at least two transmission modules (A1, A2) have different orientation with corresponding characteristics, wherein the first transmission module (A1) is oriented in the direction of motion (R) of the transport unit (F) and the second transmission module (A2) is oriented against the direction of motion (R) of the transport unit (F).

4. System according to one of claims 1 to 3, **characterised in that** the central control unit (ZK) and the component for safety control (KS) in the transport unit (F) in each case comprise units for transmission of data, wherein there is provision for one unit for transmission of data in each case per transmission channel (UK1, UK2).

5. System according to one of claims 1 to 4, **characterised in that** in order to determine faults on one of the at least two transmission channels (UK1, UK2) an error function is executed by the units for transmission of data, which error function is set to a first value during an interruption and by which a second value is assumed during uninterrupted connection.

6. System according to one of claims 1 to 5, **characterised in that** a monitoring time is parameterised for the units for transmission of data.

7. System according to one of claims 1 to 6, **characterised in that** complex data and/or data packets are provided with a numeric value and/or time stamp when transmitted to a transmit side.

8. System according to one of claims 1 to 7, **characterised in that** data and/or data packets received via an application are evaluated and it is then determined which data is declared valid.

9. System according to one of claims 1 to 8, **characterised in that** a communication system based on radio technology, in particular based on mobile telephony, wireless LAN, Bluetooth, DECT and/or so-called WirelessHART are used as wireless communication system (FN) for transmitting the complex data.

10. System according to one of claims 1 to 9, **characterised in that** a communication system based on light, laser or infrared, and/or a communication system based on sound waves is/are used as wireless communication system (FN) for transmitting the complex data.

11. System according to one of claims 1 to 10, **characterised in that** the so-called PROFINET is provided as communication standard.

## Revendications

1. Système permettant une transmission, protégée contre les erreurs et redondante, de données complexes, et plus particulièrement de données de commande, de données audio ou vidéo, entre une unité de contrôle centrale stationnaire (ZK) et un composant de commande de sécurité (KS) dans une unité de transport mobile (F) via un système de communication sans fil (FN) qui comporte plusieurs points d'accès (ZP1, ZP2, ZP3),
présentant les caractéristiques suivantes :
- le long d'une trajectoire (FS) de l'unité de transport mobile (F) sont prévus des points d'accès (ZP1, ZP2, ZP3) au système de communication sans fil (FN) ;
- pour une communication avec les points d'accès (ZP1, ZP2, ZP3) sont montés, sur l'unité de transport mobile, au moins deux modules de transmission (A1, A2) sur lesquels est implémenté le protocole dit de tunnel de couche 2 qui permet de réaliser un réseau privé virtuel ;
- une transmission des données complexes entre l'unité de contrôle centrale (ZK) et les au moins deux modules de transmission (A1, A2) est effectuée parallèlement via au moins deux canaux de transmission séparés (UK1, UK2) du système de communication sans fil (FN) ;
- respectivement un des au moins deux canaux de transmission séparés (UK1, UK2) étant associé à un des au moins deux modules de transmission (A1, A2) ;
- un couplage des au moins deux modules de transmission (A1, A2) au composant de commande de sécurité (KS) de l'unité de transport mobile (F) est effectué via respectivement un module de couplage (K1, K2) et
- les au moins deux modules de transmission (A1, A2) sont montés de manière séparée l'un de l'autre dans l'espace sur l'unité de transport (F) avec une orientation différente et des caractéristiques d'émission / de réception resp. des caractéristiques d'antenne (AC1, AC2) correspondantes de manière telle que les deux modules de transmission (A1, A2) ne changent jamais simultanément de point d'accès (ZP1, ZP2) pour l'établissement du canal de transmission respectif (UK1, UK2).

2. Système selon la revendication 1, **caractérisé en ce que** le montage d'un premier module de transmission (A1) sur une extrémité antérieure de l'unité de transport (F) dans le sens du mouvement (R) et le montage d'un deuxième module de transmission (A2) sur une extrémité postérieure de l'unité de transport (F) dans le sens du mouvement (R).

3. Système selon l'une des revendications précédentes, **caractérisé en ce que** les au moins deux modules de transmission (A1, A2) présentent une orientation différente assortie de caractéristiques correspondantes, le premier module de transmission (A1) étant orienté dans le sens du mouvement (R) de l'unité de transport (F) et le deuxième module de transmission (A2) étant orienté dans le sens inverse du sens du mouvement (R) de l'unité de transport (F).

4. Système selon l'une des revendications 1 à 3, **caractérisé en ce que** l'unité de contrôle centrale (ZK) et le composant de commande de sécurité (KS), dans l'unité de transport (F), comprennent respectivement des unités de transmission de données, respectivement une unité de transmission de données étant prévue pour chaque canal de transmission (UK1, UK2).

5. Système selon l'une des revendications 1 à 4, **caractérisé en ce que**, pour constater des perturbations dans l'un des au moins deux canaux de transmission (UK1, UK2), les unités de transmission de données exécutent une fonction d'erreur qui, en cas de perturbation, est forcée à une première valeur et qui admet une deuxième valeur en cas de liaison exempte de perturbation.

6. Système selon l'une des revendications 1 à 5, **caractérisé en ce qu'**un temps de surveillance est paramétré dans les unités de transmission de données.

7. Système selon l'une des revendications 1 à 6, **caractérisé en ce que** des données complexes et/ou des paquets de données sont, lors de la transmission, pourvus d'une valeur de comptage et/ou d'un horodatage d'un côté émetteur.

8. Système selon l'une des revendications 1 à 7, **caractérisé en ce que** des données et/ou des paquets de données reçus via une application sont évalués et **en ce qu'**il est ensuite déterminé quelles données sont déclarées valables.

9. Système selon l'une des revendications 1 à 8, **caractérisé en ce qu'**est mis en oeuvre, en tant que système de communication sans fil (FN) pour la transmission des données complexes, un système de communication basé sur la radiotechnique, et plus particulièrement sur le radio mobile, Wireless LAN, Bluetooth, DECT et/ou ce qu'il est convenu d'appeler Wireless HART.

10. Système selon l'une des revendications 1 à 9, **caractérisé en ce que** sont mis en oeuvre, en tant que système de communication sans fil (FN) pour la transmission des données complexes, un système de communication basé sur la lumière, le laser ou l'infrarouge et/ou un système de communication basé sur des ondes acoustiques.

11. Système selon l'une des revendications 1 à 10, **caractérisé en ce qu'**est prévu, en tant que norme de communication, ce qu'il est convenu d'appeler le PROFINET.
